# FASCICULE DE BREVET EUROPEEN

(11) **EP 2 801 484 B1**
(45) Date de publication et mention de la délivrance du brevet: **22.03.2017**
(21) Numéro de dépôt: 14290117.2
(22) Date de dépôt: 23.04.2014
(51) Int. Cl.: B60B 33/02, B60B 33/00

(54) **Roulette pour meuble ou analogue avec moyens de blocage**
Rollen für Möbelstück oder Ähnliches mit Feststellmitteln
Furniture caster or the like with locking means

(30) Priorité: 30.04.2013 FR 1301003
(43) Date de publication de la demande: 12.11.2014
(73) Titulaire: TENTE ROULETTES POLYMERES-BRUANDET, 39700 La Barre (FR)
(72) Inventeur: Dayt, Patrick, 25000 Besancon (FR)
(74) Mandataire: Flavenot, Bernard

(56) Documents cités:
- DE-U1-202007 008 244
- DE-U1-202008 015 131
- GB-A- 2 441 303
- JP-A- H08 207 504
- US-A1- 2010 170 061

## Description

La présente invention concerne les roulettes pour meubles ou analogues qui comportent essentiellement au moins une roue, un carter destiné à supporter et éventuellement protéger la roue, et un pivot qui assure la liaison entre le carter et le meuble.

Nombre de telles roulettes trouvent une application particulièrement avantageuse pour aider au déplacement des lits, fauteuils, tables, chariots, etc., plus particulièrement en milieu hospitalier ou analogue.

La structure d'une telle roulette doit donc être conçue de façon qu'elle permette de déplacer les meubles, comme des lits médicalisés, dans toutes les directions. En particulier, elle comporte au moins une roue, généralement deux roues en parallèle, et des moyens pour que la roue puisse tourner autour d'un axe horizontal par rapport au carter dans le but d'assurer le déplacement du meuble en translation rectiligne, ainsi que des moyens pour que le carter puisse pivoter autour d'un axe sensiblement vertical par rapport au meuble pour que la roulette puisse prendre toutes directions par rapport au meuble.

Cependant, quand le meuble est par exemple presque arrivé dans sa position définitive, il est parfois nécessaire de bloquer la roulette en orientation tout en permettant à sa roue de continuer à tourner autour de son axe horizontal pour faire subir, par exemple au lit, une translation supplémentaire parfaitement rectiligne sans qu'il puisse changer d'orientation. Quand le lit est arrivé dans sa position définitive, il est alors nécessaire de bloquer la rotation de la roue pour empêcher le lit de subir tout autre déplacement.

Dans d'autres circonstances, il peut être nécessaire de bloquer la roulette à la fois en orientation et en translation.

Il existe déjà de telles roulettes qui tentent de répondre aux conditions définies ci-dessus, par exemple celles décrites et illustrées dans les WO2007/074221 et WO2011/101562 au nom de la Demanderesse (documents ci-après désignés par WO-an) qui donnent toute satisfaction sur le plan de leur fonctionnement et de leur utilisation.

Les roulettes décrites et illustrées dans ces WO-an sont équipées d'un système de blocage du pivot des deux roues, ce qui forme un blocage dit "total". En conséquence, si un utilisateur veut déplacer le meuble sur lequel est montée cette roulette sans avoir au préalable débrayé le système de blocage, il peut y avoir un endommagement et même une destruction d'éléments constitutifs de la roulette. Autrement dit, une roulette de ce type doit pouvoir résister à des utilisations abusives pour réduire le plus possible les frais de maintenance des matériels roulants.

Les systèmes de blocage débrayables utilisés pour débrayer ce type de roulette sont par exemple du type suivant :
Le profil des dentures engrenées les unes dans les autres sont légèrement triangulaires, comme illustré dans le document antérieur référencé ci-dessus, et les éléments qui supportent ces dentures sont légèrement élastiques de manière à ce que les dents puissent glisser les unes sur les autres (échapper) sans pour autant être détruites, tout en s'opposant au couple nécessaire pour que la roulette soit perçue comme suffisamment résistante aux sollicitations une fois le système de frein engagé. S'il n'est pas possible d'utiliser l'élasticité d'un élément de support de denture, un ressort est inséré entre ce support de denture et le moyen de commande comme une pédale, pour que, en cas d'engrènement "pointe de dent" sur "pointe de dent", il n'y ait pas destruction des dentures. Pour que cela fonctionne de cette façon, il faut que le ou les ressorts de rappel soit relativement puissants.

En conséquence, quand le système est commandé pour débrayer la roulette, le ressort de rappel, qui est relativement puissant, entraîne une remontée violente de la pédale et cette dernière vient buter fortement contre un élément de butée qui est généralement une partie du carter, ce qui produit un choc relativement important, du moins très sonore, très gênant pour les malades lorsque ces roulettes sont montées sur des lits ou analogues en milieu hospitalier.

Il existe aussi des systèmes de blocage avec denture "carrée" qui ne nécessitent pas, en général, de ressort puissant puisque le profil de denture résiste aux efforts lorsque le meuble est sollicité. Mais ils ne sont pas alors débrayables et, en cas de très forte sollicitation, les dents se brisent.

Dans l'art antérieur à l'invention, on peut également citer les DE202008015131, DE202007008244, US2010170061 et GB 2441303. Les roulettes décrites dans ces derniers documents ne donnent pas entière satisfaction, notamment en ce qui concerne les bruits que peuvent produire les moyens de blocage quand ils sont actionnés car ils sont encore trop importants. Le DE202008015131 U1 divulgue une roulette selon le préambule de la revendication 1.

Aussi, la présente invention a-t-elle pour but de réaliser une roulette qui tente de pallier les inconvénients évoqués ci-avant des roulettes selon l'art antérieur.

Plus précisément, la présente invention a pour objet une roulette à blocage telle qu'elle est définie notamment dans la revendication 1 annexée.

D'autres caractéristiques et avantages de l'invention apparaîtront au cours de la description suivante donnée en regard des dessins annexés à titre illustratif mais nullement limitatif, dans lesquels :
La figure 1 est un schéma de principe de réalisation de la roulette selon l'invention,
Les figures 2 à 4 sont trois vues en écorché de côté et en légère perspective, d'un mode de réalisation industriel préféré de la roulette selon l'invention en accord avec le schéma de principe selon la figure 1, représentant respectivement la roulette dans trois états possibles de fonctionnement, à savoir : (i) avec la roue et le pivot non bloqués, (ii) avec le pivot bloqué et la roue non bloquée, (iii) avec la roue et le pivot tous deux bloqués.

Il est tout d'abord précisé que, dans la présente description, si l'adverbe "sensiblement" est associé à un qualificatif d'un moyen donné, ce qualificatif doit être compris au sens strict ou approché.

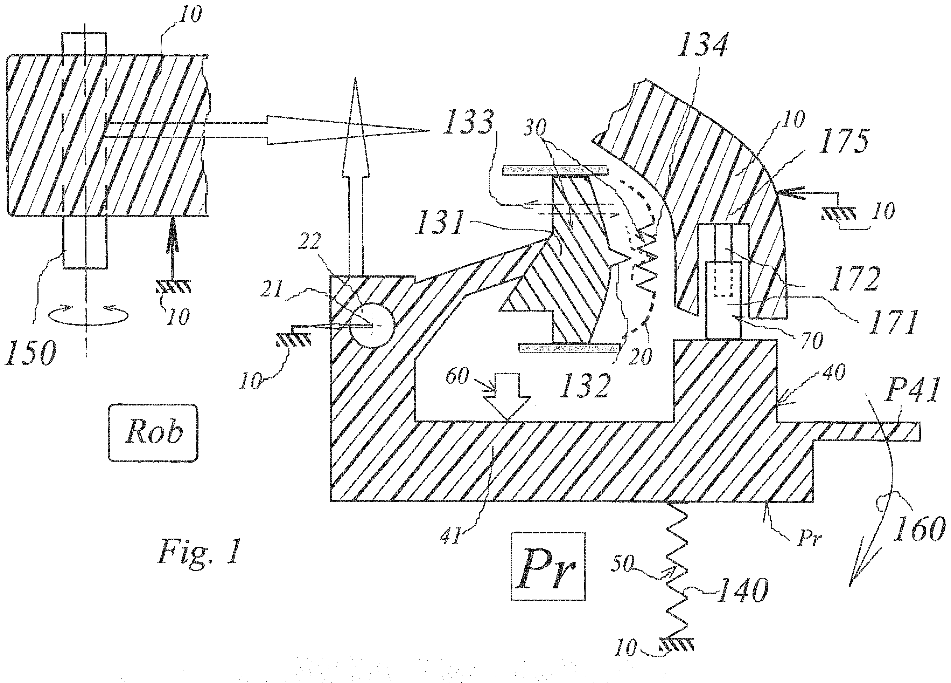

En référence plus particulièrement à la figure 1, la roulette Rob selon l'invention comprend, de façon connue notamment par les WO-an, un carter 10, au moins une roue 20, des moyens 21 pour monter la roue en rotation par rapport au carter 10 sur un arbre de rotation 22, des moyens de blocage commandables 30 pour bloquer ou non la rotation de la roue 20 par rapport au carter 10, et des moyens de commande 40 pour actionner ces moyens de blocage commandables 30.

Ces moyens de commande 40 comportent un levier 41 monté en rotation par rapport au carter 10 entre deux positions dites "position de repos" Pr et "position d'actionnement" Pab, la position de repos étant celle dans laquelle le levier 41 n'actionne pas les moyens de blocage commandables 30 et permet à la roue de pivoter par rapport au carter 10, la position d'actionnement étant celle dans laquelle le levier 41 actionne les moyens de blocage commandables 30 pour bloquer la rotation de la roue 20 par rapport au carter 10.

Ils comportent en outre des moyens 50 pour engendrer une contre-force élastique de réaction entre le levier 41 et le carter 10 quand le levier 41 passe de sa position de repos Pr à sa position d'actionnement Pab, et des moyens 60 pour bloquer le levier dans sa position d'actionnement Pab suite à une action d'un premier effort externe sur ce levier et pour le débloquer de cette position d'actionnement Pab afin de tendre à le ramener dans sa position de repos Pr sous l'action d'un second effort externe et de la contre-force élastique.

Selon une caractéristique de l'invention, ces moyens de commande 40 pour actionner les moyens de blocage commandables 30 comportent en outre des moyens d'amortissement de fin de course 70 montés en coopération entre le levier 41 et le carter 10 de façon à amortir le retour du levier dans sa position de repos Pr lorsque le levier 41 passe, suite à l'application du second effort externe défini auparavant, de sa position d'actionnement Pab à sa position de repos Pr.

Il existe différentes possibilités de réaliser de tels types de moyens d'amortissement de fin de course 70. Cependant, selon une réalisation préférentielle et particulièrement avantageuse, ils sont constitués par un vérin amortisseur comportant au moins un cylindre 171, une tige 172 montée coulissante dans le cylindre et liée au cylindre par différents moyens élastiques, non représentés car étant connu en eux-mêmes, par exemple des moyens fluidiques, magnétiques, mécaniques, etc., et des moyens pour solidariser l'un des deux éléments suivants : le cylindre et la tige, 171, 172 avec le levier 41 de façon que, lorsque le levier 41 passe, suite à l'application du second effort externe, de sa position d'actionnement Pab à sa position de repos Pr, l'autre des deux éléments 172, 171 vienne buter contre une partie du carter 10.

De façon encore plus préférentielle, les moyens de blocage commandables 30 pour bloquer ou non la rotation de la roue 20 par rapport au carter 10 sont constitués par au moins une dent mâle et un ensemble de dents femelles complémentaires de la dent mâle, l'ensemble de dents femelles et la dent mâle étant respectivement solidaires de la roue et du levier de façon que, lorsque le levier passe de sa position de repos Pr à sa position d'actionnement Pab, la dent mâle pénètre dans une dent femelle.

De façon tout à fait préférentielle, la forme des dents est en "dent de scie", c'est-à-dire de section transversale de forme triangulaire, comme illustré sur les figures.

Dans un mode de réalisation préférentiel et très avantageux, au moins l'une des dents, mais de préférence toutes, est réalisée en un matériau présentant une élasticité non négligeable.

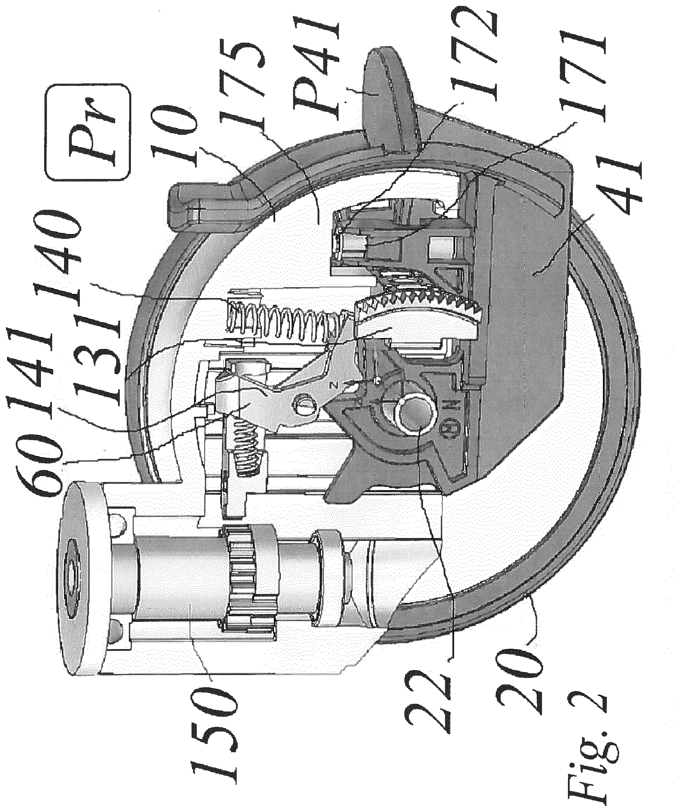

La roulette selon l'invention dont le schéma de principe est illustré sur la figure 1, peut être réalisée sous une forme industrielle, comme dans le mode de réalisation illustré sur les figures 2 à 4 annexées qui représentent trois vues en écorché de côté et en légère perspective d'un tel mode industriel préféré de la roulette dans trois états possibles de fonctionnement, à savoir : (i) avec la roue et le pivot non bloqués, (ii) avec le pivot bloqué et la roue non bloquée, (iii) avec la roue et le pivot tous deux bloqués.

Dans ce mode réalisation, les moyens de blocage commandables 30 pour bloquer ou non la rotation de la roue 20 par rapport au carter 10, sont constitués par un tiroir 131 comportant des dents mâles 132, qui, sous l'action de la rotation du levier 41, est apte à se déplacer en translation selon les flèches 133, de façon que les dents mâles viennent se loger dans des dents femelles 134 réparties sur une couronne solidaire de la paroi interne de la roue 20, comme décrit plus en détail dans les WO-an référencés ci-dessus.

Quant aux moyens 50 pour engendrer une contre-force élastique de réaction entre le levier 41 et le carter 10 quand le levier 41 passe de sa position de repos Pr à sa position d'actionnement Pab, ils sont constitués d'un ressort 140 apte à se comprimer par l'intermédiaire d'une came 141 montée rotative sur le carter et commandée en rotation inverse de celle du levier comme décrit plus en détail dans les WO-an référencés ci-dessus.

Quant aux moyens 60 pour bloquer le levier 41 dans sa position d'actionnement Pab suite à une action d'un premier effort externe sur ce levier et pour le débloquer de cette position d'actionnement Pab afin de tendre à le ramener dans sa position de repos Pr sous l'action d'un second effort externe et de la contre-force élastique, ils peuvent être constitués, comme illustré, par la forme particulière de cette came 141 qui fonctionne essentiellement comme celle qui est décrite et illustré dans les WO-an.

Il est à noter que cette came 141 peut aussi être utilisée pour bloquer le pivot 150, toujours de la même façon que celle décrite dans les WO-an.

La roulette décrite ci-dessus en regard des figures 1 à 4 s'utilise de la façon suivante :
Il est tout d'abord supposé que la roulette est fixée solidairement, de façon connue, sur le pied d'un meuble, comme un lit médicalisé ou analogue, via le pivot 150, et qu'elle est dans une configuration qui permette au lit de se déplacer en tous sens et toutes directions.

Dans ces conditions, la roulette est dans la position de repos, figure 2 (et aussi la figure 1 schématique).

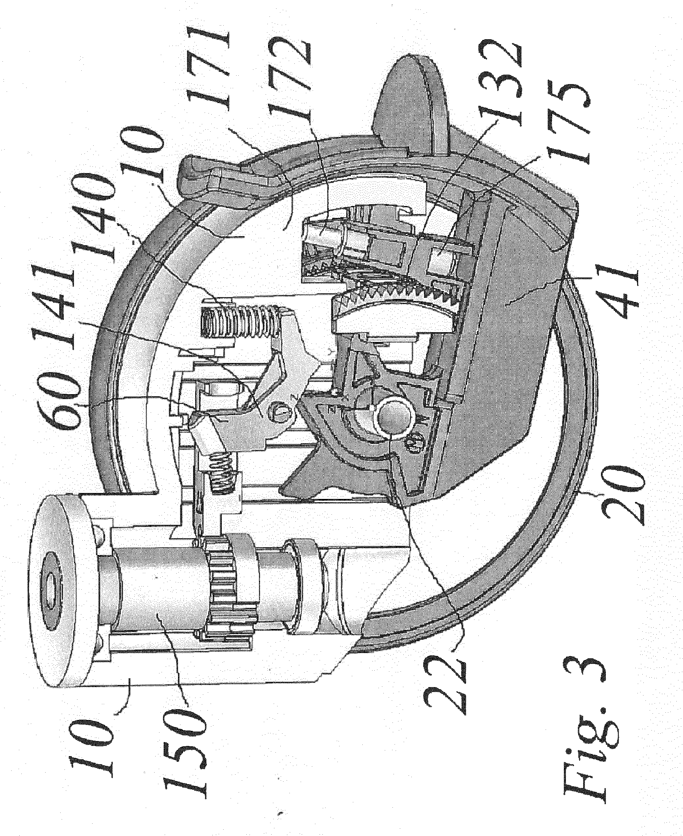

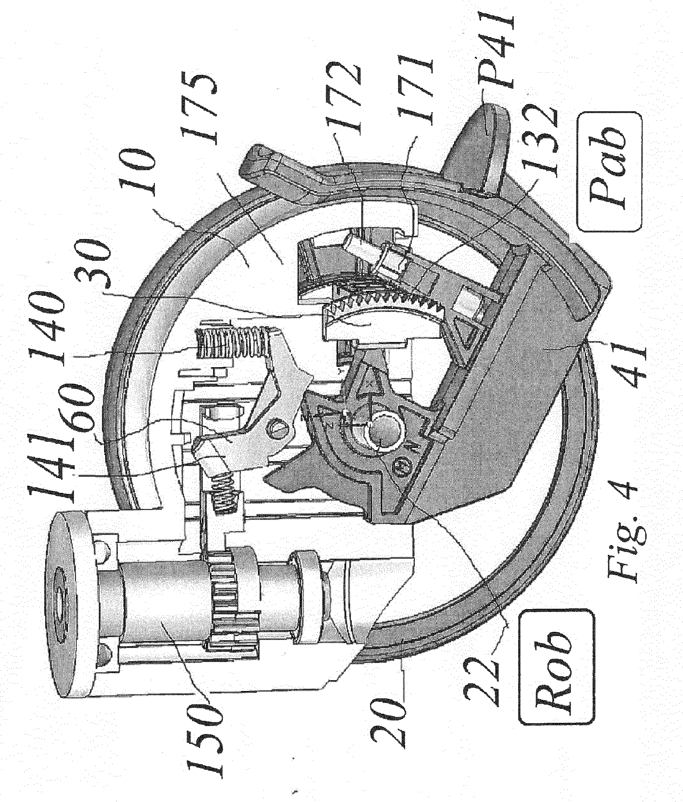

Pour bloquer la roue par rapport au carter 10, il suffit de faire pivoter le levier dans le sens dextrorsum, flèche 160 sur la figure 1, pour que la roulette se trouve tout d'abord dans un état comme illustré sur la figure 3, puis en finale dans un état comme illustré sur la figure 4 dans lequel des dents mâles 132 se logent dans des dents femelles 134, bloquant ainsi la rotation de la roue 20 par rapport au carter 10, et aussi le pivot 150 selon la réalisation préférentielle des figures 2 à 4. Lorsque la roulette est dans l'état final de blocage, le ressort 140 est fortement comprimé.

Si on veut débloquer la roue, ou la débrayer, il suffit de faire pivoter le levier 41 dans le sens senestrorsum (en sens inverse de la rotation dextrorsum 160) en appliquant le second effort défini auparavant, par exemple manuellement ou analogue, par exemple via une pédale P41 solidaire du levier 41 et montée en saillie en dehors du carter 10.

Le levier est alors entraîné vers sa position de repos, figure 2 (figure 1), sous l'action du ressort 140 qui se détend. Mais, dans ce mouvement, la tige 172 du vérin vient buter contre une partie 175 du carter 10 et se rétracte dans le cylindre 171 à l'encontre des moyens d'amortissement qui la relie au cylindre 171, ce qui amortit le retour du levier en position de repos et empêche le choc brutal du levier contre le carter, l'un des buts principaux de la présente invention.

Sur la figure 4, l'extrémité de la tige 172 est illustrée sans être au contact de la partie 175 du carter 10 quand le levier est dans sa position d'actionnement Pab, c'est-à-dire lorsque la roue est bloquée. C'est une réalisation possible car, au début du mouvement du levier 41 quand il quitte sa position d'actionnement Pab pour se diriger vers sa position de repos Pr, son mouvement est relativement lent puisque le ressort 140 commence à se détendre. En conséquence, le choc qui se produit quand l'extrémité de la tige 172 vient au contact de la partie 175 du carter (figure 3) n'engendre pas un bruit réellement perceptible.

Cette réalisation possible permet de réduire l'encombrement du levier 41 et du vérin amortisseur, et donc aussi le coût de revient de la roulette.

La structure de la roulette selon l'invention, comportant un amortisseur de fin de course comme défini ci-dessus, permet de combiner la fonction de débrayage avec une réduction de bruit, sans faire appel à des systèmes coûteux.

## Revendications

1. Roulette à blocage (Rob) comprenant : un carter (10), au moins une roue (20), des moyens (21) pour monter la roue en rotation par rapport au carter (10) sur un arbre de rotation (22), des moyens de blocage commandables (30) pour bloquer ou non la rotation de la roue (20) par rapport au carter (10), et des moyens de commande (40) pour actionner lesdits moyens de blocage commandables (30), ces dits moyens de commande comportant :
• un levier (41) monté en rotation par rapport au dit carter (10) entre deux positions dites "position de repos" (Pr) et "position d'actionnement" (Pab), la position de repos étant celle dans laquelle le levier (41) n'actionne pas les moyens de blocage commandables (30) et permet à la roue de pivoter par rapport au carter (10), la position d'actionnement étant celle dans laquelle le levier (41) actionne les moyens de blocage commandables (30) pour bloquer la rotation de la roue (20) par rapport au carter (10),
• des moyens (50) pour engendrer une contre-force élastique de réaction entre ledit levier (41) et ledit carter (10) quand ledit levier (41) passe de sa position de repos (Pr) à sa position d'actionnement (Pab), et
• des moyens (60) pour bloquer ledit levier dans sa position d'actionnement (Pab) suite à une action d'un premier effort externe sur ledit levier (41) et pour le débloquer de cette position d'actionnement (Pab) afin de tendre à le ramener dans sa position de repos (Pr) sous l'action d'un second effort externe et de la contre-force élastique,
**caractérisée par le fait que** les moyens de commande (40) pour actionner lesdits moyens de blocage commandables (30) comportent en outre des moyens d'amortissement de fin de course (70) montés en coopération entre ledit levier (41) et ledit carter (10), de façon à amortir le retour du levier dans sa position de repos (Pr) lorsque ledit levier (41) passe, suite à l'application du dit second effort externe, de sa position d'actionnement (Pab) à sa position de repos (Pr).

2. Roulette selon la revendication 1, **caractérisée par le fait que** lesdits moyens d'amortissement de fin de course (70) sont constitués par un vérin amortisseur comportant au moins un cylindre (171), une tige (172) montée coulissante dans ledit cylindre et des moyens pour solidariser l'un des deux éléments suivants : ledit cylindre et ladite tige (171, 172), avec ledit levier (41) de façon que, lorsque ledit levier (41) passe, suite à l'application du dit second effort externe, de sa position d'actionnement (Pab) à sa position de repos (Pr), l'autre des deux éléments(172, 171) vienne buter contre une partie du carter (10).

3. Roulette selon l'une des revendications 1 et 2, **caractérisée par le fait que** lesdits moyens de blocage commandables (30) pour bloquer ou non la rotation de la roue (20) par rapport au carter (10) sont constitués par au moins une dent mâle et par un ensemble de dents femelles complémentaires de la dent mâle, ledit ensemble de dents femelles et ladite dent mâle étant respectivement solidaire de la roue et du levier de façon que, lorsque le levier passe de sa position de repos (Pr) à sa position d'actionnement (Pab), la dent mâle pénètre dans une dent femelle.

4. Roulette selon la revendication 3, **caractérisée par le fait que** la forme des dents est en « dent de scie », c'est-à-dire de section transversale de forme triangulaire.

5. Roulette selon la revendication 4, **caractérisée par le fait qu'**au moins l'une des dents est réalisée en un matériau présentant une élasticité non négligeable.

## Patentansprüche

1. Feststell-Rolle (Rob), umfassend: ein Gehäuse (10), mindestens ein Rad (20), Mittel (21) zum Einbauen des Rades in einer Weise, dass es in Bezug auf das Gehäuse (10) auf einer Drehwelle (22) drehbar ist, steuerbare Feststellmittel (30), um die Drehung des Rades (20) in Bezug auf das Gehäuse (10) zu blockieren oder nicht zu blockieren, und Steuermittel (40) zum Betätigen der steuerbaren Feststellmittel (30), wobei diese Steuermittel umfassen:
- einen Hebel (41), der in Bezug auf das Gehäuse (10) drehbar zwischen zwei Positionen, der "Ruheposition" (Pr) und der "Betätigungsposition" (Pab), angeordnet ist, wobei die Ruheposition jene ist, in der der Hebel (41) die steuerbaren Feststellmittel (30) nicht betätigt und sich das Rad in Bezug auf das Gehäuse (10) drehen kann, und wobei die Betätigungsposition jene ist, in der der Hebel (41) die steuerbaren Feststellmittel (30) betätigt, um die Drehung des Rades (20) in Bezug auf das Gehäuse (10) zu blockieren,
- Mittel (50) zum Erzeugen einer elastischen Reaktionsgegenkraft zwischen dem Hebel (41) und dem Gehäuse (10), wenn der Hebel (41) von seiner Ruheposition (Pr) in seine Betätigungsposition (Pab) übergeht, und
- Mittel (60) zum Blockieren des Hebels in seiner Betätigungsposition (Pab) in Folge eines Ausübens einer ersten äußeren Kraft auf den Hebel (41) und zum Aufheben der Blockierung dieser ersten Betätigungsposition (Pab), um ihn unter der Ausübung einer zweiten äußeren Kraft und der elastischen Gegenkraft in seine Ruheposition (Pr) zurückzustellen,
**dadurch gekennzeichnet, dass** die Steuermittel (40) zum Betätigen der Feststellmittel (30) außerdem Endlagen-Dämpfungsmittel (70) umfassen, die zusammenwirkend zwischen dem Hebel (41) und dem Gehäuse (10) angeordnet sind, derart, dass die Rückkehr des Hebels in seine Ruheposition (Pr) gedämpft wird, wenn der Hebel (41) in Folge der Ausübung der zweiten äußeren Kraft von seiner Betätigungsposition (Pab) in seine Ruheposition (Pr) übergeht.

2. Rolle nach Anspruch 1, **dadurch gekennzeichnet, dass** die Endlagen-Dämpfungsmittel (70) durch einen Dämpfungszylinder gebildet sind, der mindestens umfasst: einen Zylinder (171), einen in dem Zylinder verschiebbar angeordneten Stift (172) und Mittel, um eines der zwei folgenden Elemente, Zylinder und Stift (171, 172), an dem Hebel (41) in einer Weise zu befestigen, dass dann, wenn der Hebel (41) in Folge der Ausübung der zweiten äußeren Kraft von seiner Betätigungsposition (Pab) in seine Ruheposition (Pr) übergeht, das andere der beiden Elemente (172, 171) an einem Teil des Gehäuses (10) anschlägt.

3. Rolle nach einem der Ansprüche 1 und 2, **dadurch gekennzeichnet, dass** die steuerbaren Feststellmittel (30), um die Drehung des Rades (20) in Bezug auf das Gehäuse (10) zu blockieren oder nicht zu blockieren, durch mindestens einen Zahn und durch einen Satz von zu dem Zahn komplementären Zahnvertiefungen gebildet sind, wobei der Satz von Zahnvertiefungen und der Zahn jeweils an dem Rad und an dem Hebel befestigt sind, derart, dass dann, wenn der Hebel von seiner Ruheposition (Pr) in seine Betätigungsposition (Pab) übergeht, der Zahn in eine Zahnvertiefung eindringt.

4. Rolle nach Anspruch 3, **dadurch gekennzeichnet, dass** die Zähne "sägezahnförmig" sind, d. h., ihr Querschnitt hat die Form eines Dreiecks.

5. Rolle nach Anspruch 4, **dadurch gekennzeichnet, dass** mindestens einer der Zähne aus einem Material ausgebildet ist, das eine nicht vernachlässigbare Elastizität aufweist.

## Claims

1. A blockable caster (Rob) comprising: a casing (10), at least one wheel (20), means (21) for mounting the wheel rotatably relative to the casing (10) on a rotary shaft (22), controllable blocking means (30) for optionally blocking rotation of the wheel (20) relative to the casing (10), and control means (40) for actuating said controllable blocking means (30), said control means comprising:
· a lever (41) mounted to pivot relative to said casing (10) between two positions referred to as a "rest position" (Pr) and an "actuation position" (Pab), the rest position being the position in which the lever (41) does not actuate the controllable blocking means (30) and allows the wheel to rotate relative to the casing (10), the actuation position being the position in which the lever (41) actuates the controllable blocking means (30) to block rotation of the wheel (20) relative to the casing (10);
· means (50) for generating an elastic reaction counterforce between said lever (41) and said casing (10) when said lever (41) passes from its rest position (Pr) to its actuation position (Pab); and
· means (60) for blocking said lever in its actuation position (Pab) after the action of a first external force on said lever (41), and for unblocking it from said actuation position (Pab) in order to tend to return it to its rest position (Pr) under the action of a second external force and of the elastic counterforce;
the caster being **characterized by** the fact that the control means (40) for actuating said controllable blocking means (30) further comprise end-of-stroke damper means (70) mounted in co-operation between said lever (41) and said casing (10) so as to damp the return of the lever to its rest position (Pr) when said lever (41) passes from its actuation position (Pab) to its rest position (Pr) as a result of said second external force being applied.

2. A caster according to claim 1, **characterized by** the fact that said end-of-stroke damper means (70) are constituted by a damping dash-pot comprising at least one cylinder (171), a rod (172) slidably mounted in said cylinder, and means for connecting one of the following two elements: said cylinder and said rod (171, 172), with said lever (41) in such as a manner that when said lever (41) passes from its actuation position (Pab) to its rest position (Pr) as a result of said second external force being applied, the other one of the two elements (172, 171) comes into abutment against a portion of the casing (10).

3. A caster according to claim 1 or claim 2, **characterized by** the fact that said controllable blocking means (30) for optionally blocking rotation of the wheel (20) relative to the casing (10) are constituted by at least one male tooth and by a set of female teeth complementary to the male tooth, said set of female teeth and said male tooth being secured respectively to the wheel and to the lever so that when the lever passes from its rest position (Pr) to its actuation position (Pab), the male tooth penetrates into a female tooth.

4. A caster according to claim 3, **characterized by** the fact that the teeth are of a "sawtooth" shape,
i.e. having a cross-section that is triangular in shape.

5. A caster according to claim 4, **characterized by** the fact that at least one of the teeth is made of a material presenting non-negligible elasticity.
